# FASCICULE DE BREVET EUROPEEN

(11) **EP 0 799 140 B1**
(45) Date de publication et mention de la délivrance du brevet: **04.11.1998**
(21) Numéro de dépôt: 95941705.6
(22) Date de dépôt: 08.12.1995
(51) Int. Cl.: B60C 9/20, B60C 9/22

(54) **PNEUMATIQUE DE RAPPORT DE FORME H/S 0,6**
REIFEN MIT EINEM HÖHE-ZU-BREITEVERHÄLTNISS, DAS NICHT GRÖSSER ALS 0,6 IST
TYRE WITH ASPECT RATIO H/S OF 0.6 OR LESS

(30) Priorité: 23.12.1994 FR 9415736
(43) Date de publication de la demande: 08.10.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: CLUZEL, Guy, F-63110 Beaumont (FR)
(74) Mandataire: Devaux, Edmond-Yves
(86) Numéro de dépôt international: EP9504842
(87) Numéro de publication internationale: WO9620095

(56) Documents cités:
- DE-A- 2 040 536
- DE-A- 2 541 504
- DE-A- 3 327 670
- FR-A- 1 188 486
- FR-A- 1 259 709
- US-A- 4 688 615
- PATENT ABSTRACTS OF JAPAN vol. 17 no. 389 (M-1449) ,21 Juillet 1993 & JP,A,05 069702 (TOYO TIRE&RUBBER CO. LTD.)

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une à la suivante en formant avec la direction circonférentielle du pneumatique des angles au plus égaux à 40° en valeur absolue.

Elle concerne plus particulièrement un pneumatique du type "Poids-Lourds", dont le rapport de la hauteur sur jante H sur sa largeur axiale maximale S est au plus égal à 0,60, et destiné à équiper un véhicule de moyen ou fort tonnage, tel que camion, autobus, remorque, etc .

Il est très largement connu d'utiliser dans un pneumatique des armatures de sommet composées d'une part de nappes dites de travail formées de câbles faisant avec la direction circonférentielle un certain angle, et d'autre part de nappes additionnelles formées de câbles orientés sensiblement circonférentiellement. Un tel exemple de structure est montré et décrit dans le brevet US 3 677 319, les nappes de travail étant formées d'éléments métalliques orientés à des angles compris entre 18° et 75°, alors que les nappes additionnelles sont formées de câbles textiles orientés à 0°. Une telle architecture permet de concilier les qualités contradictoires à obtenir par le pneumatique : tenue de route du véhicule et confort, résistance à l'usure et résistance au roulement par exemple. Les nappes textiles additionnelles peuvent être disposées soit sous, soit sur, soit entre les nappes de câbles métalliques, la largeur de l'ensemble textile étant compris entre 25 et 75% de la largeur de la structure métallique.

Le brevet FR 2 419 185 enseigne que le type de pneumatique concerné, à rapport H/S faible, bien que présentant de nombreux avantages, comporte aussi un certain nombre d'inconvénients, tel que l'adhérence médiocre de la zone équatoriale de la bande de roulement ou une localisation des pressions élevées dans la région des bords de bande de roulement, dues au raccourcissement de l'aire de contact dans le sens longitudinal du pneumatique. Afin de remédier auxdits inconvénients, le brevet FR cité préconise de disposer entre l'armature de carcasse et la nappe de travail radialement intérieure, dans deux zones distantes du plan équatorial, deux blocs limiteurs constitués chacun de deux nappes superposées de câbles inextensibles, croisés d'une nappe à l'autre en faisant avec la direction circonférentielle des angles opposés, au plus égaux en valeur absolue à la moitié du plus petit angle utilisé dans les nappes de travail, et différents de 0°.

Quelle que soit la solution exposée ci-dessus, son application à un pneumatique de rapport de forme H/S au plus égal à 0,60, et destiné à équiper un véhicule "Poids-Lourds", ne permet pas d'obtenir une endurance satisfaisante de l'armature de sommet. Le manque d'endurance concerne aussi bien la résistance à la fatigue des nappes de sommet, et en particulier la résistance à la séparation entre extrémités de nappes, que la résistance à la fatigue des câbles de la portion d'armature de carcasse située sous l'armature de sommet, la première insuffisance étant fortement influencée par la température de fonctionnement régnant en bordures des nappes de travail, que ce soit en roulage ligne droite ou en roulage en dérive.

L'invention a pour objet d'améliorer l'endurance de l'armature de sommet d'un pneumatique "Poids-Lourds" de rapport H/S considéré. Afin d'atteindre cet objectif, le pneumatique, conforme à l'invention, ayant une armature de sommet comprenant au moins deux nappes de sommet de travail en câbles inextensibles, croisés d'une nappe à la suivante en faisant avec la direction circonférentielle des angles compris entre 10° et 45°, lesdites nappes ayant des largeurs au moins égales à 80% de la largeur axiale maximale S₀ de l'armature de carcasse, est caractérisé en ce que, sont disposées, d'une part entre l'armature de carcasse et la nappe de travail, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle, la largeur axiale de ladite nappe étant au moins égale à 0,7 S₀, et son module d'élasticité à la traction étant au plus égal au module du même nom de la nappe de travail la plus extensible.

Il faut entendre par câble inextensible un câble, par exemple en acier, qui a un allongement relatif inférieur à 0,2% à 10% de la charge de rupture.

Des fils ou câbles orientés sensiblement parallèlement à la direction circonférentielle sont des fils ou câbles qui font avec ladite direction des angles compris dans l'intervalle +2,5°, -2,5° autour de 0°.

Un module d'élasticité à la traction d'une nappe de câbles résulte de la contrainte de traction, exercée selon la direction des câbles, nécessaire pour obtenir un allongement relatif donné ε, ledit module étant un module tangent. Par module d'élasticité de la nappe additionnelle au plus égal au module du même nom de la nappe de travail la plus extensible, il faut entendre que le module tangent de la nappe additionnelle, quelque soit l'allongement relatif, est au plus égal au module tangent de la nappe de travail la plus extensible quelque soit l'allongement relatif, la nappe la plus extensible étant la nappe qui, pour chaque valeur de contrainte de traction présente un allongement relatif supérieur à celui de l'autre nappe pour la même contrainte.

De manière avantageuse et afin de faciliter la fabrication du pneumatique, le module de la nappe additionnelle sera tel qu'il soit faible pour un allongement relatif compris entre 0% et 0,4%, et au plus égal au module d'élasticité à la traction le plus élevé de la nappe de travail la plus extensible, pour les allongements relatifs supérieurs à 0,4%.

Dans le cadre ci-dessus, la nappe additionnelle peut être formée de câbles dits élastiques, présentant une courbe contrainte de traction en fonction de l'allongement relatif ayant des pentes faibles pour les faibles allongements et une pente sensiblement constante et forte pour les allongements supérieurs. La nappe additionnelle peut aussi être formée de câbles orientés circonférentiellement et coupés de manière à former des tronçons de longueur très inférieure à la circonférence de la nappe, mais préférentiellement supérieure à 0,1 fois à ladite circonférence, les coupures entre tronçons étant axialement décalées les unes par rapport aux autres. Un tel mode de réalisation permet de conférer, de manière simple, à la nappe additionnelle le module désiré quel qu'il soit.

Les caractéristiques et avantages de l'invention seront mieux compris à l'aide de la description qui suit et qui se réfère au dessin, illustrant à titre non limitatif des exemples d'exécution, et sur lequel :
- la figure 1 représente schématiquement, vu en section méridienne, une armature de sommet conforme à l'invention,
- la figure 2 représente, vu en plan et en écorché, l'armature de sommet de la figure 1.

Le pneumatique P, de dimension 495/45 R 22.5 X, a un rapport de forme H/S égal à 0,45, H étant la hauteur du pneumatique P sur sa jante de montage et S sa largeur axiale maximale. Ledit pneumatique P comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur
- d'une première nappe (31) de câbles métalliques inextensibles orientés par rapport à la direction circonférentielle d'un angle δ égal à 65°, ladite nappe ayant pour objet de reprendre une grande partie des efforts de compression axiale auxquels peut être soumise l'armature de carcasse radiale (1),
- radialement au dessus et recouvrant la nappe précédente dite de triangulation, d'une première nappe de travail (32) formée de câbles métalliques inextensibles orientés d'un angle α, égal dans le cas montré à 22°,
- surmontant la première nappe de travail (32), d'une nappe additionnelle (33) formée d'éléments métalliques inextensibles de longueur circonférentielle sensiblement égale à 1/6 de la longueur circonférentielle de la nappe (33), lesdits éléments étant orientés 0°,
- puis d'une deuxième nappe de travail (34) formée de câbles métalliques identiques à ceux de la première nappe de travail (32), et faisant avec la direction circonférentielle un angle β, opposé à l'angle α et, dans le cas montré, égal audit angle α de 22°, ( mais pouvant être différent dudit angle α),
- et enfin d'une dernière nappe de câbles dits élastiques orientés par rapport à la direction circonférentielle d'un angle γ de même sens que l'angle β et égal audit angle β, (mais pouvant être différent dudit angle), cette dernière nappe étant une nappe de protection.

La largeur axiale L₃₂ de la première nappe de travail (32) est égale à 0,87 fois la largeur axiale maximale S₀ de la fibre moyenne de l'armature de carcasse (1), soit 416 mm, ce qui est, pour un pneumatique de forme usuelle, sensiblement inférieur à la largeur L₁ de la bande de roulement, qui est égale, dans le cas étudié, à 430 mm. La largeur axiale L₃₄ de la deuxième nappe de travail (34) est égale à 0,8 fois la largeur axiale S₀, soit 400 mm. La nappe de triangulation (31) a une largeur axiale L₃₁ égale à la moyenne arithmétique des largeurs des deux nappes de travail (32) et (34), et dans ce cas à 408 mm. Quant à la largeur axiale L₃₃ de la nappe additionnelle (33), au moins égale à 0,7 S₀, elle est égale à 350 mm, ce qui représente 0,73 S₀. En fait, la largeur L₃₃ de la nappe additionnelle (33) est inférieure à la largeur L₃₂ (L₃₄) de la nappe de travail la moins large, sans cependant être trop inférieure de manière à contribuer efficacement à la diminution des températures de fonctionnement du pneumatique à proximité des extrémités des nappes de sommet de travail, qui sont les régions les plus pénalisées par l'échauffement et les séparations entre nappes. La dernière nappe de sommet (35), dite de protection, a une largeur L₃₅ plus faible que les précédentes, soit 325 mm.

Le module élastique de traction, de la nappe de travail (32), ou de la nappe de travail (34), identique dans le cas présent, puisque formée des mêmes câbles métalliques 27.23 frettés, inextensibles et continus sur toute la largeur de la nappe, lesdits câbles étant disposés avec le même pas, c'est-à-dire avec le même espace entre câbles, est égal à 5300 daN/mm² à 0,4% d'allongement relatif. Le module, du même nom et mesuré dans les mêmes conditions, de la nappe (31) dite de triangulation, formée de câbles métalliques 9.23 frettés, est égal à 6925 daN/mm². Quant à la nappe additionnelle (33), elle est formée de câbles métalliques 27.23 frettés, et coupés de sorte à avoir des tronçons de câbles dont la longueur circonférentielle est égale à 1/6 de la longueur circonférentielle de la nappe, ce qui lui confère un module tangent d'élasticité à la traction pour un allongement relatif de 0,4% égal à 3310 daN/mm².

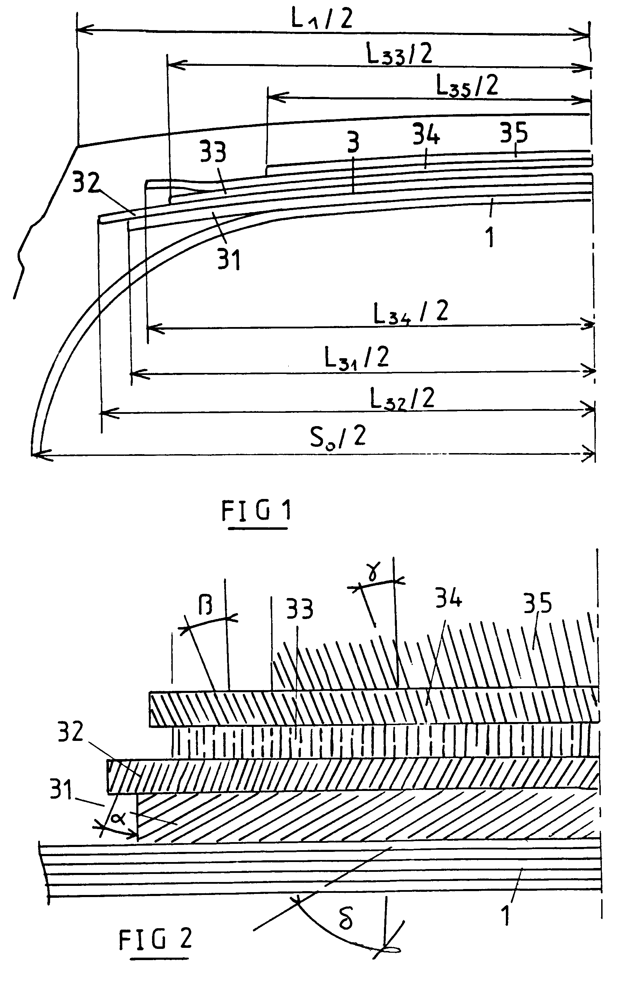

La nappe additionnelle (33) peut aussi être formée de câbles dits élastiques bi-module, c'est-à-dire des câbles présentant des allongements relatifs à la rupture supérieurs à 2,5% et des courbes force de traction-allongement relatif présentant deux parties de pentes nettement différentes, telle que la courbe (17) montrée sur la figure 2 du brevet FR 1 188 486. Une élasticité réduite de la nappe (33) n'étant utile que lors de la conformation du pneumatique dans le moule de vulcanisation, un câble présentant un faible module de l'origine à 0,4% d'allongement relatif et un module, par exemple supérieur à 14000daN/mm² permet d'obtenir aisément une nappe de câbles orientés sensiblement à 0° ayant, au dessus de 0,4% d'allongement relatif, un module de 5200 daN/mm².

Le pneumatique décrit ci-dessus permet d'obtenir une endurance satisfaisante, d'une part du point de vue séparations entre nappes de sommet de travail malgré leurs largeurs du fait de l'action combinée de la nappe de câbles circonférentiels et de la nappe de câbles fortement inclinés sur la température de fonctionnement au voisinage des extrémités de la nappe de travail la plus courte, et sur les contraintes de cisaillement entre les deux nappes de travail, et d'autre part du point de vue résistance à la fatigue de la portion de carcasse située sous l'armature de sommet, l'action combinée de la nappe de câbles circonférentiels et de la nappe de câbles fortement inclinés évitant le passage en compression desdits câbles d'armature carcasse.

## Revendications

1. Pneumatique ayant une armature de sommet (3) comprenant au moins deux nappes de sommet de travail (32, 34) en câbles inextensibles, croisés d'une nappe (32) à la suivante (34) en faisant avec la direction circonférentielle des angles (α, β) compris entre 10° et 45°, lesdites nappes ayant des largeurs L₃₂, L₃₄ au moins égales à 80% de la largeur axiale maximale S₀ de l'armature de carcasse (1), caractérisé en ce que, sont disposées, d'une part entre l'armature de carcasse (1) et la nappe de travail (32), radialement la plus proche de l'axe de rotation, une nappe (31) axialement continue, formée de câbles métalliques inextensibles faisant avec la direction circonférentielle un angle δ au moins égal à 60°, et dont la largeur axiale L₃₁ est au moins égale à la largeur axiale L₃₂, L₃₄ de la nappe de sommet de travail (32, 34) la plus courte, et d'autre part entre les deux nappes de sommet de travail (32), (34) une nappe additionnelle (33) formée d'éléments métalliques, orientés sensiblement parallèlement à la direction circonférentielle, la largeur axiale L₃₃ de ladite nappe étant au moins égale à 0,7 S₀, et son module d'élasticité à la traction étant au plus égal au module du même nom de la nappe de travail la plus extensible.

2. Pneumatique selon la revendication 1, caractérisé en ce que le module de la nappe additionnelle est faible pour un allongement relatif compris entre 0% et 0,4%, et au plus égal au module d'élasticité à la traction le plus élevé de la nappe de travail la plus extensible, pour les allongements relatifs supérieurs à 0,4%.

3. Pneumatique selon la revendication 2, caractérisé en ce que la nappe additionnelle est formée de câbles dits élastiques, présentant une courbe contrainte de traction en fonction de l'allongement relatif ayant des pentes faibles pour les faibles allongements compris entre 0 et 0,4%, et une pente forte et sensiblement constante pour les allongements supérieurs.

4. Pneumatique selon la revendication 2 caractérisé en ce que la nappe additionnelle est formée de câbles orientés circonférentiellement, et coupés de manière à former des tronçons de longueur très inférieure à la circonférence de la nappe, les coupures entre tronçons étant axialement décalées les unes par rapport aux autres .

## Claims

1. A tyre having a crown reinforcement (3) comprising at least two working crown plies (32, 34) of inextensible cables, crossed from one ply (32) to the next (34), forming angles (α, β) of between 10° and 45° with the circumferential direction, said plies having widths L₃₂, L₃₄, at least equal to 80% of the maximum axial width S₀ of the carcass reinforcement (1), characterised in that firstly an axially continuous ply (31) formed of inextensible metal cables forming with the circumferential direction an angle δ of at least 60° and the axial width L₃₁ of which is at least equal to the axial width L₃₂, L₃₄, of the shortest working crown ply (32, 34) is arranged between the carcass reinforcement (1) and the working ply (32) radially closest to the axis of rotation, and secondly an additional ply (33) formed of metallic elements oriented substantially parallel to the circumferential direction, the axial width L₃₃ of said ply being at least equal to 0.7 S₀, and its elasticity modulus upon traction being at most equal to the modulus of the same name of the most extensible working ply, is arranged between the two working crown plies (32, 34).

2. A tyre according to Claim 1, characterised in that the modulus of the additional ply is low for a relative elongation of between 0% and 0.4%, and at most equal to the greatest elasticity modulus upon traction of the most extensible working ply, for relative elongations greater than 0.4%.

3. A tyre according to Claim 2, characterised in that the additional ply is formed of so-called elastic cables, having a curve of tensile stress as a function of the relative elongation which has shallow gradients for the slight elongations of between 0 and 0.4% and a steep and substantially constant gradient for the greater elongations.

4. A tyre according to Claim 2, characterised in that the additional ply is formed of cables oriented circumferentially and cut so as to form sections of a length very much less than the circumference of the ply, the cuts between sections being axially offset relative to each other.

## Patentansprüche

1. Luftreifen mit einer Scheitelbewehrung (3), die mindestens zwei Arbeits-Scheiteleinlagen (32, 34) aus undehnbaren Seilen aufweist, die von der einen Einlage (32) zur folgenden (34) überkreuzt sind, wobei sie zur Umfangsrichtung Winkel (α, β) bilden, die zwischen 10° und 45° liegen, und wobei die genannten Einlagen Breiten L₃₂, L₃₄ aufweisen, die mindestens gleich 80 % der maximalen axialen Breite S₀ der Karkassenbewehrung (1) sind,
**dadurch gekennzeichnet, daß**
einerseits zwischen der Karkassenbewehrung (1) und der radial der Drehachse nächstgelegenen Arbeitseinlage (32) eine axial durchgehende Einlage (31), die aus undehnbaren Metallseilen gebildet ist, die zur Umfangsrichtung einen Winkel δ von mindestens 60° bilden, und deren axiale Breite L₃₁ mindestens gleich ist der axialen Breite L₃₂, L₃₄ der kürzesten Scheitel-Arbeitseinlage (32, 34), und andererseits zwischen den beiden Arbeits-Scheiteleinlagen (32), (34) eine zusätzliche Einlage (33) angeordnet ist, die aus Metallelementen gebildet ist, die etwa parallel zur Umfangsrichtung ausgerichtet sind, wobei die axiale Breite L₃₃ der genannten Einlage mindestens gleich ist 0,7 S₀, und ihr Elastizitätsmodul auf Zug höchstens gleich ist dem gleichnamigen Modul der am meisten dehnbaren Arbeitseinlage.

2. Luftreifen nach Anspruch 1, dadurch gekennzeichnet, daß der Modul der zusätzlichen Einlage für eine relative Längung gering ist, die zwischen 0 % und 0,4 % liegt, und höchstens gleich dem höchsten Elastizitätsmodul auf Zug der am meisten dehnbaren Arbeitseinlage für relative Längungen, die größer sind als 0,4 %.

3. Luftreifen nach Anspruch 2, dadurch gekennzeichnet, daß die zusätzliche Einlage aus Seilen gebildet ist, die elastische Seile genannt sind und eine erzwungene Kurve des Zuges in Funktion der relativen Längung darbietet, die geringe Steigungen für geringe Längungen aufweist, die zwischen 0 und 0,4 % liegen, und eine kräftige und etwa konstante Steigung für größere Längungen.

4. Luftreifen nach Anspruch 2, dadurch gekennzeichnet, daß die zusätzliche Einlage aus in Umfangsrichtung ausgerichteten Seilen gebildet ist, die derart geschnitten sind, daß Stücke mit einer Länge gebildet sind, die sehr viel kleiner ist als der Umfang der Einlage, wobei die Schnittstellen zwischen den Stücken axial zueinander versetzt sind.
